# EUROPEAN PATENT APPLICATION

(11) **EP 4 787 050 A1**
(43) Date of publication of application: **05.08.2026**
(21) Application number: 23954657.5
(22) Date of filing: 15.12.2023
(51) Int. Cl.: G02B 27/01, G02C 7/08, G02C 9/04

(54) **AR GLASSES, ASSEMBLY METHOD FOR AR GLASSES, AND AND CLAMP APPARATUS THEREFOR**

(30) Priority: 07.10.2023 WO PCT/CN2023/123274
(71) Applicant: SHENZHEN YIWEN TECH LIMITED, Guangdong 518000 (CN)
(72) Inventor: OUYANG, Jian, Shenzhen, Guangdong 518000 (CN)
(74) Representative: Agca Kizil, Tugce
(86) International application number: PCT/CN2023/139240
(87) International publication number: WO 2025/073145

(57) **Abstract**

The present application relates to the technology of display devices, and discloses a pair of AR glasses, an assembly method for AR glasses, and a fixture device. The AR glasses include: a frame module including a frame assembly and a temple assembly, where the frame assembly is provided with a first engagement structure; a display module including a display assembly and an optical waveguide assembly, where the optical waveguide assembly is connected to the frame assembly and provided with a coupling-in grating region and a coupling-out grating region, and the display assembly is connected to the frame assembly and disposed corresponding to the coupling-in grating region; and a near-eye lens module provided with a second engagement structure, where the second engagement structure is configured to engage the first engagement structure, and the near-eye lens module is disposed corresponding to the coupling-out grating region and on a side of the optical waveguide assembly close to the temple assembly. The present application achieves reliable fixing of the near-eye lens module in the AR glasses, improves the detachability of the near-eye lens module, facilitates repeated processing for the AR glasses, and isolates a space between the near-eye lens module and the optical waveguide assembly from the outside.

## Description

### Technical Field

The present application relates to the field of display devices, and in particular to a pair of AR glasses, an assembly method for AR glasses, and a fixture device.

### Background Art

Existing AR (Augmented Reality) glasses products can provide users with many convenient functions. For a user who has a need for vision correction, in a pair of AR glasses, in addition to providing optical waveguides to transmit images output by a display assembly, it is also necessary to provide matching refractive lenses to assist the user who has a need for vision correction in using the AR glasses.

A solution in which refractive lenses are bonded to optical waveguides is generally used for the existing AR glasses and assembly methods for AR glasses. However, since users have different prescription data, when a pair of AR glasses is made for a user, it is necessary to first conduct an eye exam for the user at an offline optical store and trim and polish refractive lenses according to prescription data, and then return to the factory to bond the refractive lenses to optical waveguides. Thus, configuring AR glasses requires a long time period, resulting in a poor user experience.

In addition, if the user should find that the refractive lenses were not suitable after trying on the AR glasses, the bonding process makes it difficult to adjust or replace the refractive lenses, thus greatly reducing the reconfigurability of the AR glasses.

### Summary

Embodiments of the present application provide a pair of AR glasses, an assembly method for AR glasses, and a fixture device, which aim to achieve reliable fixing of a near-eye lens module in the AR glasses, improve the detachability of the near-eye lens module, and facilitate repeated processing for the AR glasses.

In a first aspect, an embodiment of the present application provides a pair of AR glasses including:
a frame module including a frame assembly and a temple assembly connected to the frame assembly, where the frame assembly is provided with a first engagement structure;
a display module including a display assembly and an optical waveguide assembly, where the optical waveguide assembly is connected to the frame assembly and provided with a coupling-in grating region and a coupling-out grating region, and the display assembly is connected to the frame assembly and disposed corresponding to the coupling-in grating region; and
a near-eye lens module provided with a second engagement structure, where the second engagement structure is configured to engage the first engagement structure, and the near-eye lens module is disposed corresponding to the coupling-out grating region and on a side of the optical waveguide assembly close to the temple assembly.

In a second aspect, an embodiment of the present application further provides another AR glasses including:
a frame assembly provided with a first engagement structure and a temple connector that is configured to fit with an external temple;
a display module including a display assembly and an optical waveguide assembly, where the optical waveguide assembly is connected to the frame assembly and provided with a coupling-in grating region and a coupling-out grating region, and the display assembly is connected to the frame assembly and disposed corresponding to the coupling-in grating region; and
a near-eye lens module provided with a second engagement structure, where the second engagement structure is configured to engage the first engagement structure, and the near-eye lens module is disposed corresponding to the coupling-out grating region and on a side of the optical waveguide assembly close to the temple connector.

In a third aspect, an embodiment of the present application further provides an assembly method for AR glasses for assembling any of the AR glasses according to the embodiments of the present application. The method includes:
providing a frame assembly, a near-eye lens module to be mounted to the frame assembly, and a fixture device for clamping the near-eye lens module;
controlling the fixture device to clamp and transfer the near-eye lens module to enable the second engagement structure of the near-eye lens module to be connected to the first engagement structure of the frame assembly in an engaging manner; and removing the fixture device to obtain the AR glasses.

In a fourth aspect, an embodiment of the present application further provides a fixture device for assembling any of the AR glasses according to the embodiments of the present application. The fixture device includes at least two clamping members to cooperate to clamp a target lens, each of the clamping members including a first clamping portion located at a front end of the clamping member and a second clamping portion located at a rear end of the clamping member;
where a thickness of the second clamping portion in a second direction is less than a thickness of the first clamping portion, the second direction opposite a direction in which the clamping member clamps the near-eye lens module.

In summary, the embodiments of the present application provide a pair of AR glasses, an assembly method for AR glasses, and a fixture device. The AR glasses include: a frame module including a frame assembly and a temple assembly connected to the frame assembly, where the frame assembly is provided with a first engagement structure; a display module including a display assembly and an optical waveguide assembly, where the optical waveguide assembly is connected to the frame assembly and provided with a coupling-in grating region and a coupling-out grating region, and the display assembly is connected to the frame assembly and disposed corresponding to the coupling-in grating region; and a near-eye lens module provided with a second engagement structure, where the second engagement structure is configured to engage the first engagement structure, and the near-eye lens module is disposed corresponding to the coupling-out grating region and on a side of the optical waveguide assembly close to the temple assembly. In the AR glasses according to the embodiments of the present application, the provision of the first engagement structure and the second engagement structure that engage with each other achieves reliable fixing of the near-eye lens module in the AR glasses, improves the detachability of the near-eye lens module, and facilitates repeated processing for the AR glasses. Moreover, the first engagement structure and the second engagement structure are disposed at positions such that the space between the near-eye lens module and the optical waveguide assembly is isolated from the outside.

### Brief Description of the Drawings

To describe the technical solutions in the embodiments of the present application more clearly, the following briefly describes the accompanying drawings required for describing the embodiments. Apparently, the accompanying drawings in the following description show merely some embodiments of the present application, and those skilled in the art may derive other drawings from these accompanying drawings without creative efforts.
FIG. 1 is a modular structural diagram of an implementation of a pair of AR glasses according to an embodiment of the present application;
FIG. 2 is a schematic structural diagram of an implementation of the AR glasses according to an embodiment of the present application;
FIG. 3 is a schematic partial structural diagram of an implementation of the AR glasses according to an embodiment of the present application;
FIG. 4 is a schematic structural diagram of an implementation of a refractive assembly of the AR glasses according to an embodiment of the present application;
FIG. 5 is a schematic diagram of a scenario of connection between a first engagement structure and a second engagement structure in an implementation of the AR glasses according to an embodiment of the present application;
FIG. 6 is a schematic structural diagram of a first elastic assembly in an implementation of the AR glasses according to an embodiment of the present application;
FIG. 7 is a schematic structural diagram of the first engagement structure and the second engagement structure in a further implementation of the AR glasses according to an embodiment of the present application;
FIG. 8 is a schematic diagram of a scenario of connection between the first engagement structure and the second engagement structure in the further implementation of the AR glasses according to an embodiment of the present application;
FIG. 9 is a schematic structural diagram of a first connecting surface and a second connecting surface in an implementation of the AR glasses according to an embodiment of the present application;
FIG. 10 is a schematic diagram of a receiving cavity in an implementation of the AR glasses according to an embodiment of the present application;
FIG. 11 is a modular structural diagram of a further implementation of the AR glasses according to an embodiment of the present application;
FIG. 12 is a schematic structural diagram of the further implementation of the AR glasses according to an embodiment of the present application;
FIG. 13 is a schematic flowchart of steps of an assembly method for AR glasses according to an embodiment of the present application;
FIG. 14 is a schematic diagram showing transfer of the first elastic assembly to a first connection groove in the assembly method for AR glasses according to an embodiment of the present application;
FIG. 15 is a schematic structural diagram of a fixture device according to an embodiment of the present application;
FIG. 16 is a schematic diagram showing transfer of a near-eye lens module by means of the fixture device in an implementation of the assembly method for AR glasses according to an embodiment of the present application;
FIG. 17 is a schematic diagram showing transfer of the near-eye lens module and the first elastic assembly in an implementation of the assembly method for AR glasses according to an embodiment of the present application;
FIG. 18 is a schematic diagram showing transfer of the near-eye lens module and the first elastic assembly of the AR glasses according to an embodiment of the present application; and
FIG. 19 is a schematic modular diagram of a fixture device according to an embodiment of the present application.

### List of reference signs:

1. AR glasses; 10. Frame module; 11. Frame assembly; 111. Lens mount; 1111. Central portion; 112. Temple connector; 113. Second receiving groove; 114. Guide groove; 12. Temple assembly; 20. Display module; 21. Display assembly; 22. Optical waveguide assembly; 221. Coupling-in grating region; 222. Coupling-out grating region; 23. Control assembly; 30. Near-eye lens module; 31. First receiving groove; 32. Clearance part; 33. Refractive assembly; 40. First engagement structure; 41. First connection groove; 42. Second elastic assembly; 43. First elastic rubber layer; 44. First connecting surface; 441. First friction protrusion; 45. Fourth elastic assembly; 50. Second engagement structure; 51. First elastic assembly; 511. First elastic ring member; 52. Second connection groove; 53. Second elastic rubber layer; 54. Second connecting surface; 541. Second friction protrusion; 55. Third elastic assembly; 60. Receiving cavity; 2. Fixture device; 201. Clamping member; 2011. First clamping portion; 2012. Second clamping portion; 2013. Guide structure; 202. Driving member; 3. Pressing tool.

### Detailed Description of Embodiments

The technical solutions in the embodiments of the present application will be described below with reference to the accompanying drawings in the embodiments of the present application. Apparently, the embodiments described are some rather than all of the embodiments of the present application. Other embodiments obtained by those of ordinary skill in the art based on the embodiments of the present application without creative efforts shall fall within the scope of protection of the present application. The flowcharts shown in the accompanying drawings are merely examples for description, but do not necessarily include all content or operations/steps, and the operations/steps are not necessarily performed in the order described. For example, some operations/steps may alternatively be split, combined, or partially combined, and therefore an actual order of execution may change depending on an actual situation. The foregoing descriptions are merely specific embodiments of the present application, but are not intended to limit the protection scope of the present application. Any equivalent modification or replacement readily figured out by a person skilled in the art within the technical scope disclosed in the present application shall fall within the protection scope of the present application. Therefore, the scope of protection of the present application shall be subject to the scope of protection of the claims.

Some implementations of the present application are described in detail below with reference to the accompanying drawings. The following embodiments and features in the embodiments may be combined with each other without conflicts.

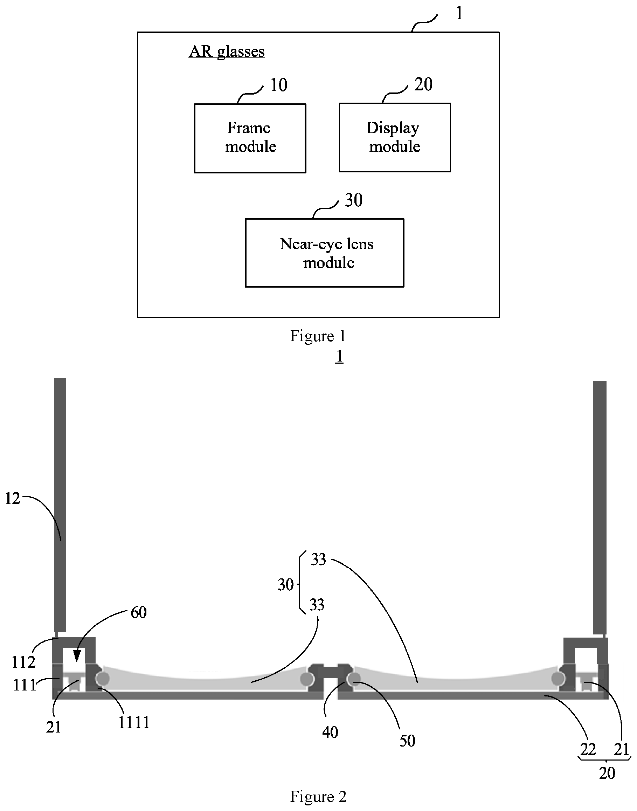

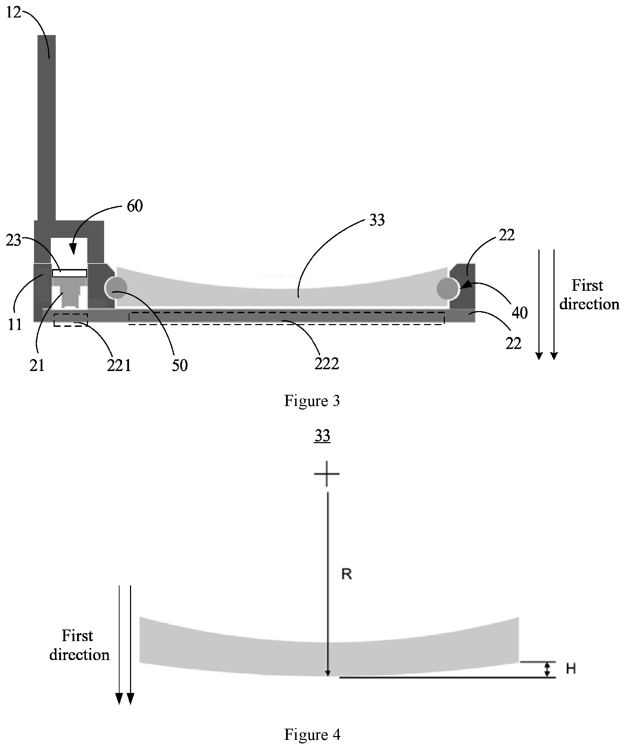

Referring to FIGS. 1 to 3, FIG. 1 is a modular structural diagram of an implementation of a pair of AR glasses according to an embodiment of the present application; FIG. 2 is a schematic structural diagram of an implementation of the AR glasses according to an embodiment of the present application; and FIG. 3 is a schematic partial structural diagram of an implementation of the AR glasses according to an embodiment of the present application.

As shown in FIGS. 1 to 3, an embodiment of the present application provides a pair of AR glasses 1 including a frame module 10, a display module 20, and a near-eye lens module 30. The structure of each part of the AR glasses 1 is described below in detail.

Specifically, the frame module 10 includes a frame assembly 11 and a temple assembly 12 connected to the frame assembly 11. The frame assembly 11 is configured to mount the display module 20 and the near-eye lens module 30. The frame assembly 11 is provided with a first engagement structure 40, and the near-eye lens module 30 is provided with a second engagement structure 50. The display module 20 includes a display assembly 21 and an optical waveguide assembly 22. The optical waveguide assembly 22 is connected to the frame assembly 11. The optical waveguide assembly 22 is provided with a coupling-in grating region 221 and a coupling-out grating region 222. The display assembly 21 is connected to the frame assembly 11 and is disposed corresponding to the coupling-in grating region 221.

It should be noted that the optical waveguide assembly 22 includes an optical waveguide lens forming the coupling-in grating region 221 and the coupling-out grating region 222. It is known that the optical waveguide assembly 22 is configured such that an optical signal input into the coupling-in grating region 221 is directed and then output from the coupling-out grating region 222.

Specifically, the second engagement structure 50 is configured to engage the first engagement structure 40, and the near-eye lens module 30 is disposed corresponding to the coupling-out grating region 222 and on a side of the optical waveguide assembly 22 close to the temple assembly 12. It should be understood that when the first engagement structure 40 of the frame assembly 11 engages the second engagement structure 50 of the near-eye lens module 30, the near-eye lens module 30 is disposed opposite the coupling-out grating region 222 and located on the side of the optical waveguide assembly 22 close to the temple assembly 12.

It should be understood that under the action of an external force, the first engagement structure 40 and the second engagement structure 50 can be engaged with each other, or the first engagement structure 40 and the second engagement structure 50 which are engaged with each other can be disengaged from each other, enabling a detachable fit between the near-eye lens module 30 and the frame assembly 11.

For example, different users may have different needs for vision correction, or multiple eye exams and repeated polishing of the near-eye lens module 30 are needed during a process of fitting prescription eyewear for a user, or a user is still not satisfied with the refractive effect of the near-eye lens module 30 after the near-eye lens module 30 is mounted. In these scenarios, with the AR glasses 1 according to the embodiments of the present application, the detachability of the near-eye lens module 30 is improved, and repeated processing for the AR glasses 1 is easy to achieve.

Specifically, in the AR glasses 1 according to the embodiments of the present application, at least the temple assembly 12 is used to provide wearing support, and when a user wears the AR glasses 1, the temple assembly 12 fits the user's head so that the AR glasses 1 fit the user's face; further, the frame assembly 11 can also be used to provide wearing support; and furthermore, the frame module 10 further includes a nose pad for providing wearing support.

As shown in FIG. 3, specifically, the display assembly 21 is configured to output an image. The image is incident on the coupling-in grating region 221 of the optical waveguide assembly 22, and is directed through the optical waveguide assembly 22 and output from the coupling-out grating region 222. When a user is wearing the AR glasses 1, the user's head is opposite the coupling-out grating region 222 of the optical waveguide assembly 22, and the image output from the coupling-out grating region 222 is displayed in the user's field of vision.

For example, the display assembly 21 is an optical engine for outputting images.

Further, the display module 20 further includes a control assembly 23. The control assembly 23 is connected to the display assembly 21 to control the images output by the optical engine.

In some implementations, the near-eye lens module 30 includes one of a refractive assembly 33 or a plano assembly. For example, the near-eye lens module 30 shown in FIGS. 2 and 3 is the refractive assembly 33.

The refractive assembly 33 includes, but is not limited to, a refractive lens. The plano assembly includes, but is not limited to, a plano lens.

As shown in FIGS. 2 and 3, specifically, the refractive assembly 33 is configured such that light that is input to the refractive assembly 33 is adjusted to meet the user's need for vision correction. For example, when the user has a need for vision correction, the image that is output by the display assembly 21 is directed through the optical waveguide assembly 22 into the refractive assembly 33, while light from the outside reaching the AR glasses 1 is directed through the optical waveguide assembly 22 into the refractive assembly 33, and then the incoming optical signal is adjusted by the refractive assembly 33 to enable the adjusted optical signal to reach the user's field of vision.

It should be understood that when there is no need for vision correction, the refractive assembly 33 can be replaced with the plano assembly, in which case the light from the outside and the image that is output by the display assembly 21 overlay and pass through the plano assembly into the user's field of vision.

In some implementations, the refractive assembly 33 includes a refractive lens with one plano side and the other concave side. When the refractive assembly 33 is used to meet a user's need for myopia correction, the plano side of the refractive lens faces the optical waveguide assembly 22, and the concave side of the refractive lens faces away from the optical waveguide assembly 22. This allows the dimension of the AR glasses 1 in a direction of thickness of the refractive assembly 33 to be further compressed, and also facilitates control of the distance between the refractive lens and the optical waveguide assembly 22 during a manufacturing process.

Referring to FIG. 4, FIG. 4 is a schematic structural diagram of an implementation of a refractive assembly 33 of the AR glasses according to an embodiment of the present application.

As shown in FIGS. 3 and 4, in some other implementations, the near-eye lens module 30 includes the refractive assembly 33. The refractive assembly 33 is a refractive lens with one concave side and the other convex side. When the refractive assembly 33 is used to meet the user's need for myopia correction, the convex side of the refractive lens faces the optical waveguide assembly 22, and the concave side of the refractive lens faces away from the optical waveguide assembly 22.

Further, the convex side of the refractive lens is relatively flat compared with the concave side of the refractive lens, that is, the surface of the refractive lens facing the optical waveguide lens is a slightly curved surface.

Preferably, a curvature range R of the side of the refractive lens facing the optical waveguide lens is greater than 130 mm, and a convex height range H is less than 2 mm.

In some implementations, the optical waveguide assembly 22 includes an optical waveguide lens and protective members disposed on opposite sides of the optical waveguide lens. The protective members on both sides are configured to seal and protect the optical waveguide lens from both sides to improve the durability of the optical waveguide lens. It should be noted that the opposite sides of the optical waveguide lens refer to a side of the optical waveguide lens close to the near-eye lens module 30 (a near-eye end) and a side of the optical waveguide lens away from the near-eye lens module 30.

Preferably, the protective member is light-transmitting to ensure good overall light transmittance of the optical waveguide assembly 22. For example, the protective member is made of glass, such as CG (CoverGlass).

In some other implementations, the optical waveguide assembly 22 includes an optical waveguide lens, and a protective member is provided only on the side of the optical waveguide lens away from the near-eye lens module 30. That is, no protective member is provided on the side of the optical waveguide lens close to the near-eye lens module 30.

It should be understood that the protective member has a certain thickness. Therefore, in the implementations of the present application, in the AR glasses 1, no protective member is provided on the side close to the near-eye lens module 30, so that the dimensions of the optical waveguide assembly 22 and the near-eye lens module 30 in the direction of thickness are further compressed, making the AR glasses lighter. Moreover, the near-eye lens module 30 and a first engagement mechanism 40 and a second engagement mechanism 50 engaged with each other are provided on the side of the optical waveguide lens close to the near-eye lens module 30 (the near-eye end), ensuring the sealing and protection effect of the optical waveguide lens.

It should be understood that, as shown in FIGS. 2 and 3, FIG. 2 shows a schematic partial structural diagram of the AR glasses 1 according to the embodiments of the present application, preferably, the AR glasses 1 according to the embodiments of the present application has a double-sided structure the same as the structure shown in FIG. 3 that is configured to output and display images on both sides of the AR glasses 1.

In some implementations, the display assembly 21 includes at least a first display assembly 21 and a second display assembly 21. The first display assembly 21 and the second display assembly 21 respectively correspond to the user's left and right eyes, and are configured to output and display images on both sides of the AR glasses 1.

It should be noted that, as shown in FIGS. 2 and 3, when the first engagement structure 40 and the second engagement structure 50 engage with each other, the near-eye lens module 30 is mounted to the frame assembly 11, a certain spacing is formed between the near-eye lens module 30 and the optical waveguide assembly 22 to meet optical design requirements, and the provision of the first engagement structure 40 and the second engagement structure 50 that engage each other is also conducive to preventing external dust, moisture, etc. from entering the spacing between the near-eye lens module 30 and the optical waveguide assembly 22, thus avoiding affecting the quality of the AR glasses 1.

Therefore, in the AR glasses 1 according to the embodiments of the present application, the provision of the first engagement structure 40 and the second engagement structure 50 that engage each other achieves reliable fixing of the near-eye lens module 30 in the AR glasses 1, improves the detachability of the near-eye lens module 30, and facilitates repeated processing for the AR glasses 1, and the arrangement of the first engagement structure 40 and the second engagement structure 50 in an engaging manner also isolates a space between the near-eye lens module 30 and the optical waveguide assembly 22 from the outside.

In some implementations, at least one of the first engagement structure 40 or the second engagement structure 50 is an elastic engagement structure, which enables connection between the near-eye lens module 30 and the frame assembly 11 in an engaging manner and facilitates their mounting and detachment, and provides a certain degree of redundancy for the design of the near-eye lens module 30 in the length direction and the width direction.

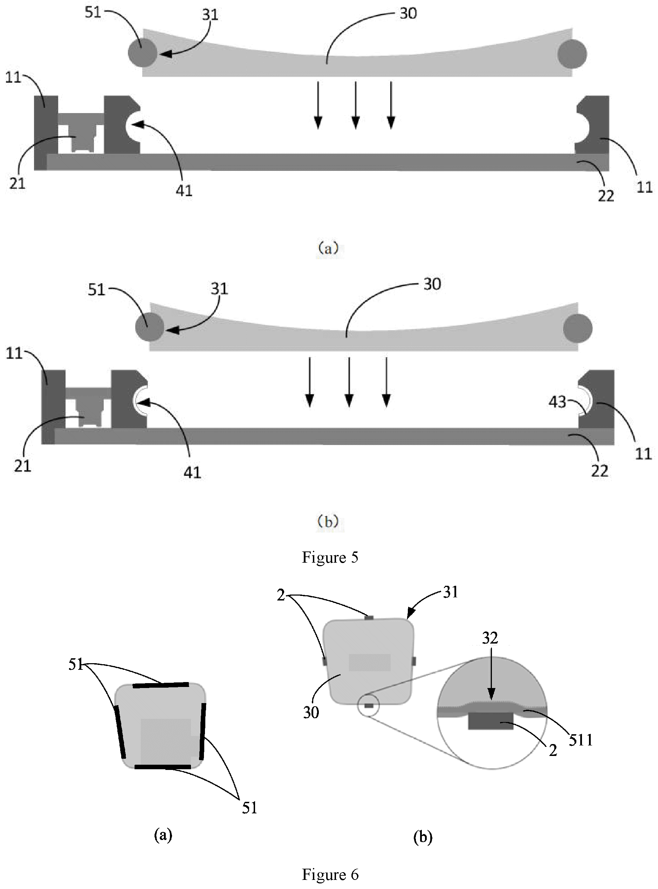

Referring to FIG. 5, FIG. 5 is a schematic diagram of a scenario of connection between the first engagement structure and the second engagement structure in an implementation of the AR glasses according to an embodiment of the present application.

As shown in FIG. 5(a), in some implementations, the first engagement structure 40 includes a first connection groove 41 formed on a side of the frame assembly 11 facing the near-eye lens module 30, and the second engagement structure 50 includes a first elastic assembly 51 disposed on a lateral portion of the near-eye lens module 30 and configured to elastically engage with the first connection groove 41.

That is, at least the second engagement structure 50 is an elastic engagement structure.

For example, the first elastic assembly 51 includes an elastic rubber ring disposed on the lateral portion of the near-eye lens module 30, and when the first engagement structure 40 engages the second engagement structure 50, the elastic rubber ring is at least partially received in the first connection groove 41 and engages with a wall of the first connection groove 41.

The provision of the first elastic assembly 51 on the lateral portion of the near-eye lens module 30 improves the mounting and fixing effect of the near-eye lens module 30 and the frame assembly 11, and improves the isolation effect for the spacing between the near-eye lens module 30 and the optical waveguide assembly 22.

For example, the interference fit between the elastic rubber ring and the wall of the second connection groove 52 further improves the mounting and fixing effect of the near-eye lens module 30 and the frame assembly 11 and improves the isolation effect for the space between the near-eye lens module 30 and the optical waveguide assembly 22.

As shown in FIG. 5(b), in some implementations, a first elastic rubber layer 43 is provided on an inner wall of the first connection groove 41 to improve the mounting and fixing effect of the near-eye lens module 30 and the frame assembly 11 and to reserve a certain amount of redundancy for the design of the near-eye lens module 30 in the length direction and the width direction.

As shown in FIGS. 5(a) and 5(b), in some implementations, the near-eye lens module 30 is provided with a first receiving groove 31, and the first elastic assembly 51 is detachably connected to the near-eye lens module 30 by means of the first receiving groove 31.

Specifically, the first elastic assembly 51 can be received in the first receiving groove 31 or disengaged from the first receiving groove 31 to enable a detachable connection between the first elastic assembly 51 and the near-eye lens module 30.

In some implementations, the first receiving groove 31 is disposed opposite the frame assembly 11 and formed on a lateral side of the near-eye lens module 30, and when the first elastic assembly 51 is connected to and fits with the near-eye lens module 30, the first elastic assembly 51 partially protrudes from the first receiving groove 31.

It should be noted that when the first elastic assembly 51 is detachably connected to the near-eye lens module 30, a portion of the first elastic assembly 51 is received in the first receiving groove 31, while the other portion is exposed from the first receiving groove 31 and protrudes from the lateral portion of the near-eye lens module 30.

Referring to FIG. 6, FIG. 6 is a schematic structural diagram of the first elastic assembly in an implementation of the AR glasses according to an embodiment of the present application.

As shown in FIG. 6(a), in some implementations, at least two first elastic assemblies 51 are provided, and the first elastic assemblies 51 at least form elastic structure engagement with the first connection groove 41 at two points.

Specifically, in the AR glasses 1, at least two first elastic assemblies 51 are provided, and first connection grooves 41 are disposed corresponding to the first elastic assemblies 51 and respectively form elastic structure engagement with the at least two first elastic assemblies 51.

For example, at least two first connection grooves 41 are formed in lateral portions of the frame assembly 11 close to the near-eye lens module 30, the number and positions of the first connection grooves 41 correspond to the first elastic assemblies 51, and when the first engagement structure 40 engages the second engagement structure 50, the first elastic assemblies 51 are respectively connected to the corresponding first connection grooves 41 in an engaging manner.

Correspondingly, first receiving grooves 31 are formed in the lateral portions of the near-eye lens module 30 at positions opposite the first elastic assemblies 51. In some implementations, at least two first receiving grooves 31 are provided, and the first receiving grooves 31 are disposed at positions corresponding to the near-eye lens module 30, so as to receive the corresponding first elastic assemblies 51.

In some implementations, the first elastic assemblies 51 are at least disposed on opposite sides of the near-eye lens module 30 in at least one of the length direction or the width direction.

Specifically, the first elastic assemblies 51 are at least disposed on opposite sides of the near-eye lens module 30 in at least one of the length direction or the width direction, so that the near-eye lens module 30 is evenly engaged by the frame assembly 11, thereby improving the mounting and fixing effect of the near-eye lens module 30 and the frame assembly 11. For example, when the first elastic assemblies 51 are disposed on opposite sides of the near-eye lens module 30 in the length direction, the near-eye lens module 30 can be evenly engaged and fixed from opposite sides of the near-eye lens module 30 in the length direction.

Similarly, when the first elastic assemblies 51 are disposed on opposite sides of the near-eye lens module 30 in the width direction, or when the first elastic assemblies 51 are disposed on opposite sides of the near-eye lens module 30 in both the width direction and the length direction, the near-eye lens module 30 can also be evenly engaged by the frame assembly 11, thereby improving the mounting and fixing effect of the near-eye lens module 30 and the frame assembly 11.

For example, as shown in FIG. 6(a), the first elastic assemblies 51 are disposed on opposite sides of the near-eye lens module 30 in both the length direction and the width direction, so as to achieve more uniform engagement and fixing for the near-eye lens module 30.

As shown in FIG. 6(b), in some implementations, the first elastic assembly 51 includes a first elastic ring member 511 sleeved on an outer periphery of the near-eye lens module 30, and the first elastic ring member 511 forms elastic structure engagement with the first connection groove 41.

Specifically, the first elastic assembly 51 is arranged around the outer periphery of the near-eye lens module 30, and the first elastic assembly 51 cooperates with the frame assembly 11 to circumferentially engage and fix the near-eye lens module 30, so that the near-eye lens module 30 is evenly engaged by the frame assembly 11, thereby improving the mounting and fixing effect of the near-eye lens module 30 and the frame assembly 11.

For example, the first elastic ring member 511 is a rubber ring, and the crosssectional shape of the rubber ring may be square, circular or polygonal, etc., which will not be specifically defined herein.

As shown in FIG. 6(b), in some implementations, the near-eye lens module 30 further includes a clearance part 32 recessed in the first connection groove 41 and configured to fit with an external workpiece, and when the first elastic assembly 51 is connected to the first receiving groove 31, the first elastic assembly 51 is enclosed in the clearance part 32.

Specifically, the external workpiece is, for example, a fixture device 2, and when the first elastic assembly 51 is connected to the first receiving groove 31, the first elastic assembly 51 is enclosed in the clearance part 32. When the fixture device 2 clamps the outer periphery of the first elastic assembly 51 at a position corresponding to the clearance part 32, the first elastic assembly 51 located between the fixture device 2 and the clearance part 32 is partially shifted toward the recess of the clearance part 32 and undergoes a certain elastic deformation, so that the space required by the fixture device 2 in a radial direction of the near-eye lens module 30 is reduced when the fixture device 2 clamps the near-eye lens module 30 and the first elastic assembly 51, making it convenient to mount the near-eye lens module 30 and the first elastic assembly 51 at corresponding positions on the frame assembly 11 during the assembly process for the AR glasses 1.

Further, after the near-eye lens module 30 and the first elastic assembly 51 are mounted at corresponding positions on the frame assembly 11, the fixture device 2 is disengaged from the near-eye lens module 30, and the first elastic assembly 51 recovers from deformation and shifting, so that the first elastic assembly 51 fits with the first connection groove 41 and the first receiving groove 31.

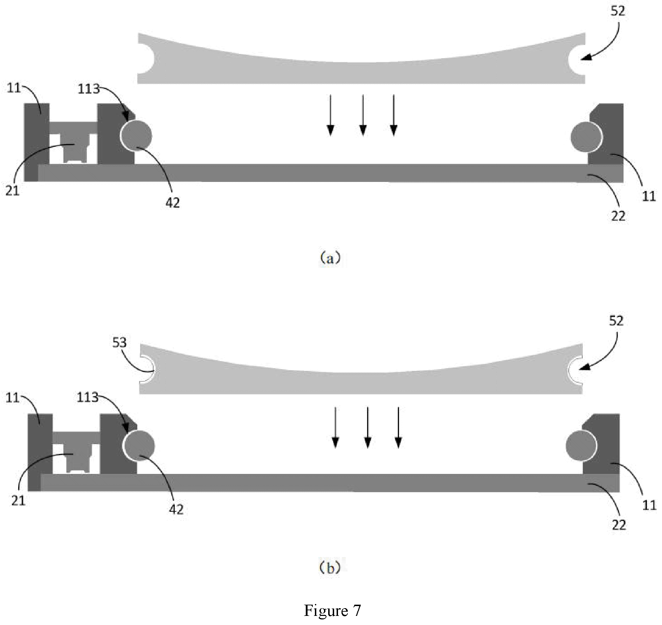

Referring to FIG. 7, FIG. 7 is a schematic structural diagram of the first engagement structure and the second engagement structure in a further implementation of the AR glasses according to an embodiment of the present application.

As shown in FIG. 7(a), in some implementations, the second engagement structure 50 includes a second connection groove 52 disposed on a side of the near-eye lens module 30 facing the frame assembly 11, and the first engagement structure 40 includes a second elastic assembly 42 disposed on a lateral portion of the frame assembly 11 and configured to elastically engage with the second connection groove 52.

That is, at least the first engagement structure 40 is an elastic engagement structure.

For example, the second elastic assembly 42 includes an elastic rubber ring disposed on an inner periphery of the frame assembly 11, and when the first engagement structure 40 engages the second engagement structure 50, the elastic rubber ring is at least partially received in the second connection groove 52 and engages with a wall of the second connection groove 52.

The provision of the second elastic assembly 42 on the inner periphery of the frame assembly 11 improves the mounting and fixing effect of the near-eye lens module 30 and the frame assembly 11, and improves the isolation effect for the spacing between the near-eye lens module 30 and the optical waveguide assembly 22.

For example, the interference fit between the elastic rubber ring and the wall of the second connection groove 52 further improves the mounting and fixing effect of the near-eye lens module 30 and the frame assembly 11 and the sealing for the space between the near-eye lens module 30 and the optical waveguide assembly 22.

As shown in FIG. 7(b), in some implementations, a second elastic rubber layer 53 is provided on an inner wall of the second connection groove 52 to improve the mounting and fixing effect of the near-eye lens module 30 and the frame assembly 11 and to reserve a certain amount of redundancy for the design of the near-eye lens module 30 in the length direction and the width direction.

As shown in FIGS. 7(a) and 7(b), in some implementations, the frame assembly 11 is provided with a second receiving groove 113, and the second elastic assembly 42 is detachably connected to the frame assembly 11 by means of the second receiving groove 113.

Specifically, the second elastic assembly 42 can be received in the second receiving groove 113 or disengaged from the second receiving groove 113 to enable a detachable connection between the second elastic assembly 42 and the frame assembly 11. When the second elastic assembly 42 is detachably connected to the frame assembly 11, a portion of the second elastic assembly 42 is received in the second receiving groove 113, while the other portion is exposed from the second receiving groove 113 and protrudes from the inner periphery of the frame assembly 11.

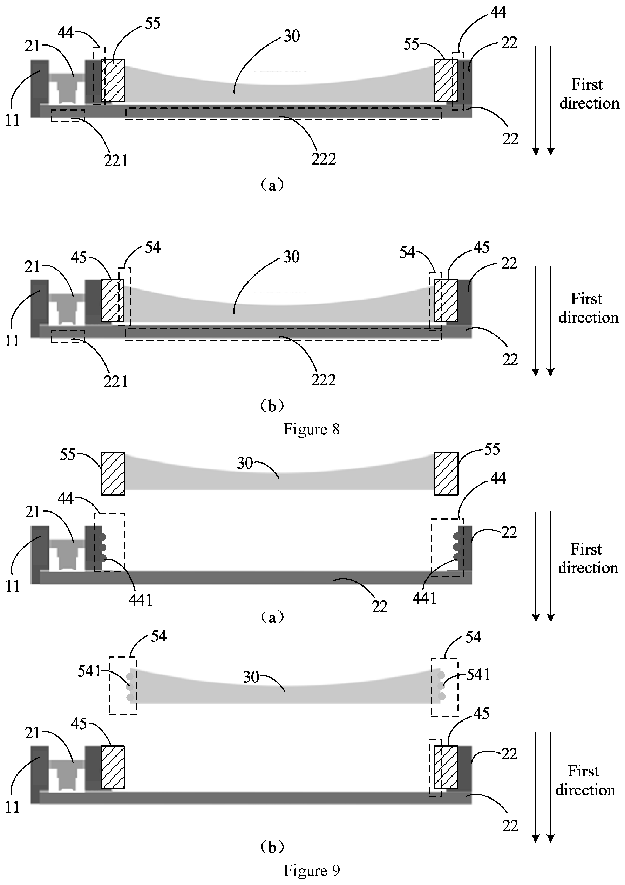

Referring to FIG. 8, FIG. 8 is a schematic diagram of a scenario of connection between the first engagement structure and the second engagement structure in the further implementation of the AR glasses according to an embodiment of the present application.

As shown in FIG. 8(a), in some implementations, the first engagement structure 40 includes a first connecting surface 44 formed on the side of the frame assembly 11 facing the near-eye lens module 30. The second engagement structure 50 includes a third elastic assembly 55. The third elastic assembly 55 is disposed on the lateral portion of the near-eye lens module 30 and is configured to elastically engage with the first connecting surface 44.

Specifically, when the first engagement mechanism is connected to the second engagement mechanism in an engaging manner, the third elastic assembly 55 is sandwiched between the frame assembly 11 and the near-eye lens module 30, and is in an interference fit with the first connecting surface 44 and the inner side of the frame assembly 11.

It should be noted that the volume of the third elastic assembly 55 is specifically designed according to the spacing between the first connecting surface 44 on the frame assembly 11 and the near-eye lens module 30. Specifically, the volume of the third elastic assembly 55 is designed to allow the third elastic assembly to be in an interference fit between the first connecting surface 44 and the outer side of the near-eye lens module 30. That is, when the first engagement mechanism is connected to the second engagement mechanism in an engaging manner, the third elastic assembly 55 is in an elastically compressed state to enable connection and fastening between the frame assembly 11 and the near-eye lens module 30.

Compared with the implementation that involves slotting the frame assembly 11 and the near-eye lens module 30, the implementations of the present application reduce the difficulty of processing and reprocessing the near-eye lens module 30, and also provide a better sealing effect for the space between the near-eye lens module 30 and the optical waveguide assembly 22, which is conducive to preventing external dust, moisture, etc. from entering the spacing between the near-eye lens module 3030 and the optical waveguide assembly 2222, thus avoiding affecting the quality of the AR glasses 11.

For example, the first connecting surface 44 is a flat surface. As another example, the third elastic assembly 55 is, for example, a rubber ring sleeved on the outer side of the near-eye lens module 30.

As shown in FIG. 8(b), in some implementations, the second engagement structure 50 includes a second connecting surface 54 formed on the side of the near-eye lens module 30 facing the frame assembly 11; and the first engagement structure 40 includes a fourth elastic assembly 45, and the fourth elastic assembly 45 is disposed on the lateral portion of the frame assembly 11 and is configured to elastically engage with the second connecting surface 54.

Specifically, when the first engagement mechanism is connected to the second engagement mechanism in an engaging manner, the fourth elastic assembly 45 is sandwiched between the frame assembly 11 and the near-eye lens module 30, and is in an interference fit with the second connecting surface 54 and the outer side of the near-eye lens module 30.

It should be noted that the volume of the fourth elastic assembly 45 is specifically designed according to the spacing between the second connecting surface 54 on the near-eye lens module 30 and the frame assembly 11. Specifically, the volume of the fourth elastic assembly 45 is designed to allow the fourth elastic assembly to be in an interference fit between the second connecting surface 54 and the inner side of the frame assembly 11. That is, when the first engagement mechanism is connected to the second engagement mechanism in an engaging manner, the fourth elastic assembly 45 is in an elastically compressed state to enable connection and fastening between the frame assembly 11 and the near-eye lens module 30.

Compared with the implementation that involves slotting the frame assembly 11 and the near-eye lens module 30, the implementations of the present application reduce the difficulty of processing and reprocessing the near-eye lens module 30, and also provide a better sealing effect for the space between the near-eye lens module 30 and the optical waveguide assembly 22.

For example, the second connecting surface 54 is a flat surface. As another example, the fourth elastic assembly 45 is, for example, a rubber ring disposed on the inner side of the frame assembly 11.

It should be noted that, in order to improve the firmness and tightness of the connection between the third elastic member/fourth elastic member and the frame assembly 11 and the near-eye lens module 30, the frame assembly 11 can be connected on a side of the third elastic member/fourth elastic member close to the frame assembly 11 by means of adhesive bonding, and the near-eye lens module 30 can be connected to a side of the third elastic member/fourth elastic member close to the near-eye lens module 30 by means of adhesive bonding.

It should be noted that the third elastic assembly 55 and the fourth elastic assembly 45 may be the same elastic assembly. For example, the third elastic assembly 55 may be a ring-shaped elastic rubber ring, such as a rubber ring, and the fourth elastic assembly 45 is similar.

It should also be noted that when the third elastic member and the fourth elastic member are the same elastic member, the two implementations described above can be executed together.

Referring to FIG. 9, FIG. 9 is a schematic structural diagram of the first connecting surface and the second connecting surface in an implementation of the AR glasses according to an embodiment of the present application.

As shown in FIGS. 8(a) and 9(a), in some implementations, the first connecting surface 44 is formed with a first friction protrusion 541 to increase the friction between the third elastic assembly 55 and the first connecting surface 44 in a first direction that is a direction of the optical waveguide assembly 22 relative to the near-eye lens module 30.

It should be noted that the provision of the first friction protrusion 541 on the first connecting surface 44 can effectively increase the friction between the third elastic assembly 55 and the first connecting surface 44 in the first direction to prevent the third elastic assembly 55 from disengaging between the frame assembly 11 and the near-eye lens module 30.

As shown in FIGS. 8(b) and 9(b), in some implementations, the second connecting surface 54 is formed with a second friction protrusion 542 to increase the friction between the fourth elastic assembly 45 and the second connecting surface 54 in the first direction that is the direction of the optical waveguide assembly 22 relative to the near-eye lens module 30.

Similarly, the provision of the second friction protrusion on the second connecting surface 54 can effectively increase the friction between the fourth elastic assembly 45 and the second connecting surface 54 in the first direction to prevent the fourth elastic assembly 45 from disengaging between the frame assembly 11 and the near-eye lens module 30.

As shown in FIGS. 3 and 5, in some implementations, the spacing between the near-eye lens module 30 and the optical waveguide assembly 22 in the first direction ranges from 1 to 1000 µm, where the first direction is a direction of the near-eye lens module 10 relative to the optical waveguide assembly 22.

It should be noted that when the spacing between the near-eye lens module 30 and the optical waveguide assembly 22 in the first direction is less than 1 um, the submicron-level spacing may cause diffraction fringes in the visible light band; conversely, when the spacing is greater than 100 um, the close fit between the near-eye lens module 30 and the optical waveguide assembly 22 in the first direction is poor, resulting in a larger volume of the AR glasses 1.

In the embodiments of the present application, the first engagement structure 40 and the second engagement structure 50 are provided to mount the near-eye lens module 30 to the frame assembly 11 in an engaging manner, so that after mounting, the spacing between the near-eye lens module 30 and the optical waveguide assembly 22 in the first direction is relatively fixed, and the spacing between the near-eye lens module 30 and the optical waveguide assembly 22 in the first direction is limited to ranging from 1 to 1000 µm. Compared with the existing solution in which the near-eye lens module 30 is fixed, such as a magnetic suction or adhesion solution, the thicknesses of the near-eye lens module 30 and the optical waveguide assembly 22 in the first direction are further effectively reduced, making the AR glasses 1 lighter.

In some implementations, the frame assembly 11 is provided, on a side close to the near-eye lens module 30, with a guide groove 114 configured to fit with an external workpiece, where the guide groove 114 has a greater width on a side close to the temple assembly 12 than on a side away from the temple assembly 12.

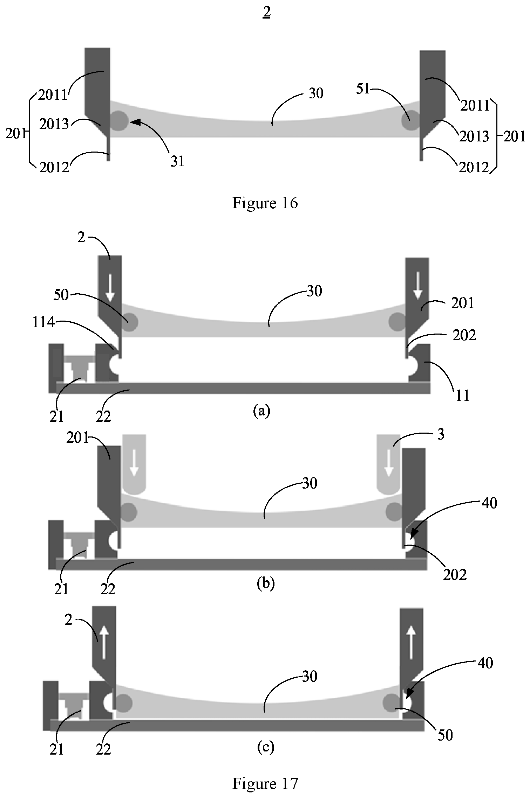

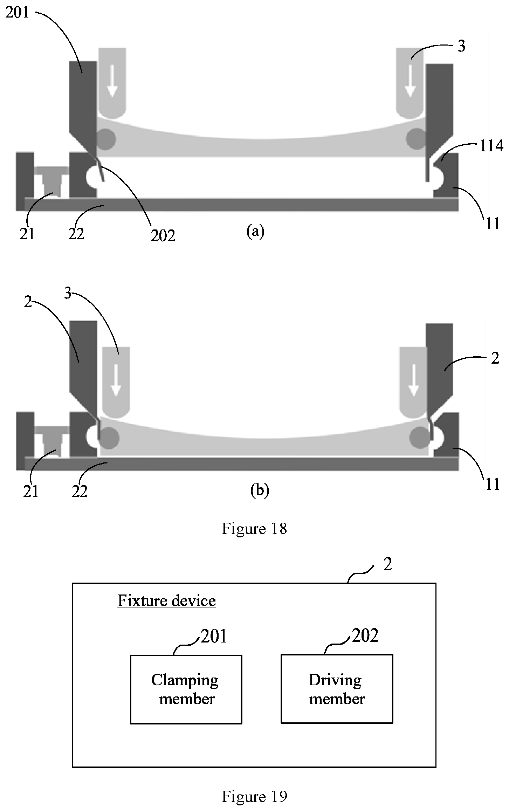

For details, referring to FIGS. 17 and 18, the external workpiece is, for example, a fixture device 2, and since the guide groove 114 has a greater width on the side close to the temple assembly 12 than on the side away from the temple assembly 12, during the process of the fixture device 2 clamping and transferring the near-eye lens module 30 to mount the near-eye lens module 30 to the frame assembly 11, under the guidance of the guide groove 114, it is easier for the near-eye lens module 30 to move to the matching mounting position of the near-eye lens module 30, thereby reducing the mounting difficulty and reducing the mounting error.

As shown in FIGS. 1 to 7, in some implementations, the frame assembly 11 includes a lens mount 111 and a temple connector 112 connected to the temple assembly 12 and the lens mount 111. The lens mount 111 is provided with a first engagement structure 40 to be connected to the near-eye lens module 30. The optical waveguide assembly 22 is connected to a side of the lens mount 111 away from the temple connector 112.

Specifically, the first engagement structure 40 is disposed on the lens mount 111, and the optical waveguide assembly 22 is connected to the side of the lens mount 111 away from the temple connector 112. It should be understood that images output by the display assembly 21 is directed through the optical waveguide assembly 22 into the near-eye lens module 30, while light from the outside reaching the AR glasses 1 is directed through the optical waveguide assembly 22 into the near-eye lens module 30, and then the incoming optical signal is adjusted by the near-eye lens module 30 to enable the adjusted optical signal to reach the user's field of vision. Therefore, when the user is wearing the AR glasses 1, the light from the outside reaching the AR glasses 1 and the images output by the display assembly 21 are directed together through the optical waveguide assembly 22 into the user's field of vision.

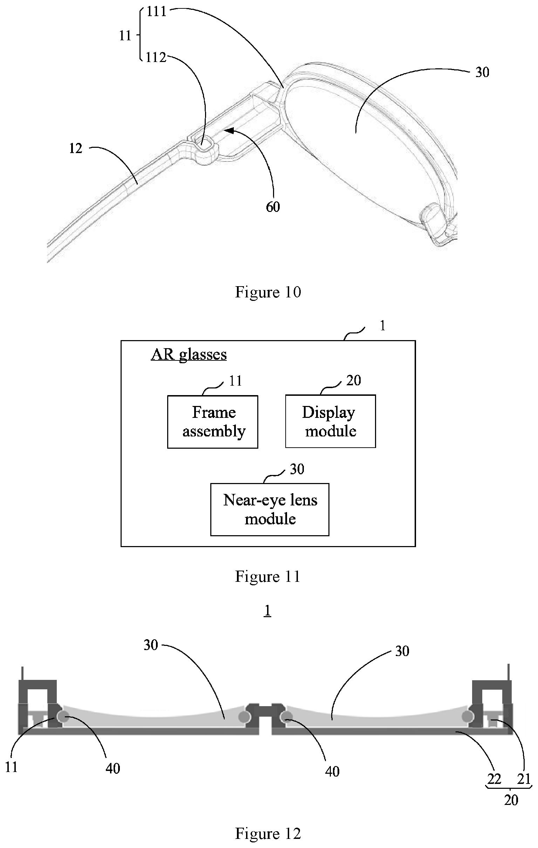

Referring to FIG. 10, FIG. 10 is a schematic diagram of a receiving cavity in an implementation of the AR glasses according to an embodiment of the present application.

As shown in FIG. 10, in some implementations, the frame assembly 11 further includes a receiving cavity 60. The receiving cavity 60 is disposed on a side of the lens mount 111 close to the temple assembly 12 and opposite the coupling-in grating region 221 of the optical waveguide assembly 22, and the display assembly 21 is received in the receiving cavity 60.

It should be noted that at least one of the lens mount 111 or the temple connector 112 forms the receiving cavity 60. For example, in FIG. 10, the lens mount 111 forms the receiving cavity 60 on the side close to the temple connector 112. Specifically, the receiving cavity 60 is opposite the coupling-in grating region 221 of the optical waveguide assembly 22 and is configured to receive the display assembly 21 to enable the images output by the display assembly 21 to accurately enter the coupling-in grating region 221 of the optical waveguide assembly 22.

As shown in FIGS. 1 to 10, in some implementations, the lens mount 111 includes a central portion 1111, the first engagement structure 40 is disposed on a side of the central portion 1111 close to the temple assembly 12, and the optical waveguide assembly 22 is connected to a side of the central portion 1111 away from the temple assembly 12.

That is, a side of the lens mount 111 close to the first engagement structure 40 and the optical waveguide assembly 22 is of a "T-shaped structure", and the first engagement structure 40 and the optical waveguide assembly 22 are located on two sides of the "T-shaped structure".

It should be understood that the central portion 1111 separates the first engagement structure 40 from the optical waveguide assembly 22 to ensure the distance between the near-eye lens module 30 and the optical waveguide assembly 22 and also improve the overall strength of the AR glasses 1.

Referring to FIGS. 11 and 12, FIG. 11 is a modular structural diagram of a further implementation of a pair of AR glasses according to an embodiment of the present application, and FIG. 12 is a schematic structural diagram of the further implementation of the AR glasses according to an embodiment of the present application.

As shown in FIGS. 11 and 12, an embodiment of the present application further provides a pair of AR glasses 1 including a frame assembly 11, a display module 20, and a near-eye lens module 30. The frame assembly 11 is provided with a first engagement structure 40 and a temple connector 112 that is configured to fit with an external temple. The display module 20 includes a display assembly 21 and an optical waveguide assembly 22. The optical waveguide assembly 22 is connected to the frame assembly 11. The optical waveguide assembly 22 is provided with a coupling-in grating region 221 and a coupling-out grating region 222. The display assembly 21 is connected to the frame assembly 11 and is disposed corresponding to the coupling-in grating region 221. The near-eye lens module 30 is provided with a second engagement structure 50. The second engagement structure 50 is configured to engage the first engagement structure 40. The near-eye lens module 30 is disposed corresponding to the coupling-out grating region 222 and on a side of the optical waveguide assembly 22 close to the temple connector 112.

It should be understood that the further AR glasses 1 according to the embodiments of the present application is provided with the temple connector 112, and is configured to be connected to an external temple by means of the temple connector 112. It should be noted that the structure and principle of the parts of the further AR glasses 1 according to the embodiments of the present application can refer to the above description, which will not be described herein again.

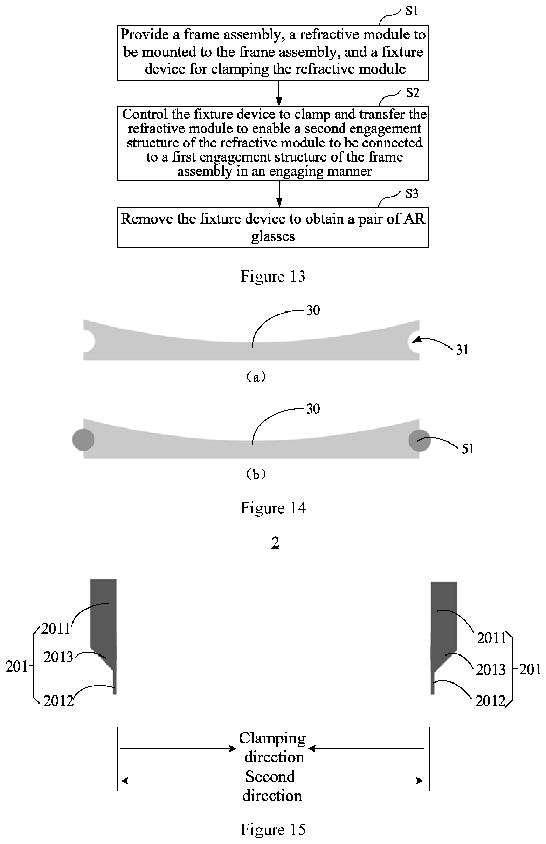

Referring to FIG. 13, FIG. 13 is a schematic flowchart of steps of an assembly method for AR glasses according to an embodiment of the present application.

As shown in FIG. 13, an embodiment of the present application further provides an assembly method for AR glasses 1 for at least assembling any of the AR glasses 1 according to the embodiments of the present application. The assembly method for AR glasses 1 specifically includes steps S1 to S3:
in step S1, providing a frame assembly 11, a near-eye lens module 30 to be mounted to the frame assembly 11, and a fixture device 2 for clamping the near-eye lens module 30;
in step S2, controlling the fixture device 2 to clamp the near-eye lens module 30 and transfer the near-eye lens module 30 to enable a second engagement structure 50 of the near-eye lens module 30 to be connected to a first engagement structure 40 of the frame assembly 11 in an engaging manner; and
in step S3, removing the fixture device 2 to obtain a pair of AR glasses 1.

Referring to FIGS. 14 and 16, FIG. 14 is a schematic diagram showing transfer of the first elastic assembly to a first connection groove in the assembly method for AR glasses according to an embodiment of the present application; FIG. 15 is a schematic structural diagram of the fixture device according to an embodiment of the present application; and FIG. 16 is a schematic diagram showing transfer of the near-eye lens module by means of the fixture device in an implementation of the assembly method for AR glasses according to an embodiment of the present application.

As shown in FIGS. 1 to 14, in some implementations, the first engagement structure 40 includes a first connection groove 41 disposed on a side of the frame assembly 11 facing the near-eye lens module 30; and the second engagement structure 50 includes a first receiving groove 31 and a first elastic assembly 51, where the first receiving groove 31 is disposed opposite the frame assembly 11 and formed on a lateral side of the near-eye lens module 30, and when the first elastic assembly 51 is connected to and fits with the near-eye lens module 30, the first elastic assembly 51 partially protrudes from the first receiving groove 31.

Accordingly, in step S2, controlling the fixture device 2 to clamp the near-eye lens module 30 and transfer the near-eye lens module 30 includes:
providing the first elastic assembly 51;
transferring the first elastic assembly 51 to the first receiving groove 31 to enable the first elastic assembly 51 to partially protrude from the lateral portion of the near-eye lens module 30;
controlling the fixture device 2 to clamp the near-eye lens module 30 from an outer side of the near-eye lens module 30; and
transferring the near-eye lens module 30 and the first elastic assembly 51 by means of the fixture device 2 to enable the first elastic assembly 51 to be received in the first connection groove 41 and the first receiving groove 31.

Specifically, the first elastic assembly 51 is first mounted to and fits with the near-eye lens module 30, and the first elastic assembly 51 is mounted to and fits with the near-eye lens module 30 specifically by transferring the first elastic assembly 51 to the first connection groove 41 to enable the first elastic assembly 51 to partially protrude from the lateral portion of the near-eye lens module 30.

It should be noted that FIG. 14(a) is a schematic diagram showing the case before the first elastic assembly 51 is transferred to the first connection groove 41, and FIG. 14(b) is a schematic diagram showing the case after the first elastic assembly 51 is transferred to the first receiving groove 31.

It should be noted that the transfer of the first elastic assembly 51 to the first receiving groove 31 may be implemented by means of an apparatus or by an operator, which will not be specifically defined in the embodiments of the present application.

As shown in FIGS. 14 and 15, after the first elastic assembly 51 is mounted to and fits with the near-eye lens module 30, the fixture device 2 is controlled to clamp the near-eye lens module 30 from the outer periphery of the near-eye lens module 30, and the near-eye lens module 30 and the first elastic assembly 51 are transferred by means of the fixture device 2 to enable the first elastic assembly 51 to be received in the first connection groove 41 and the first receiving groove 31.

As shown in FIG. 15, in some implementations, when the fixture device 2 clamps the outer periphery of the first elastic assembly 51, the fixture device 2 pushes the first elastic assembly 51 toward the recess of the first receiving groove 31, so as to at least cause shifting and/or compression of a portion of the first elastic assembly 51 located between the fixture device 2 and the first receiving groove 31.

Referring to FIG. 16, FIG. 16 is a schematic diagram showing transfer of the near-eye lens module in a further implementation of the assembly method for AR glasses according to an embodiment of the present application.

As shown in FIGS. 2, 3 and 16, in some implementations, the assembly method for AR glasses 1 according to the embodiments of the present application further includes:
controlling the fixture device 2 to clamp the near-eye lens module 30 from the outer side of the near-eye lens module 30 to enable the first elastic assembly 51 to compress toward the first connection groove 41.

After the fixture device 2 is disengaged from the near-eye lens module 30, the first elastic assembly 51 recovers from deformation to enable the first elastic assembly 51 to fit with the first connection groove 41 and the first receiving groove 31.

Specifically, when the fixture device 2 clamps the outer periphery of the first elastic assembly 51, the fixture device 2 pushes the first elastic assembly 51 toward the recess of the first receiving groove 31 to cause shifting and/or compression of a portion of the first elastic assembly 51 located between the fixture device 2 and the first receiving groove 31; and after the fixture device 2 is disengaged from the near-eye lens module 30, the first elastic assembly 51 recovers from deformation to enable the first elastic assembly 51 to fit with the first connection groove 41 and the first receiving groove 31.

FIGS. 2 and 3 can be considered as schematic diagrams of the first elastic assembly 51 recovering from deformation after the fixture device 2 is disengaged from the near-eye lens module 30. As shown, a portion of the first elastic assembly 51 fits with the first connection groove 41, and another portion of the first elastic assembly 51 fits with the first receiving groove 31, so that the near-eye lens module 30 is mounted and fixed to the frame assembly 11, and the design of the first elastic assembly 51 improves the isolation effect for the spacing between the near-eye lens module 30 and the optical waveguide assembly 22.

It should also be noted that when the fixture device 2 clamps the near-eye lens module 30 and the first elastic assembly 51, the elastic design of the first elastic assembly 51 reduces the space required by the fixture device 2 in the radial direction of the near-eye lens module 30, making it convenient to mount the near-eye lens module 30 and the first elastic assembly 51 to corresponding positions on the frame assembly 11.

As shown in FIGS. 6(b), 14 and 15, in some implementations, the near-eye lens module 30 further includes a clearance part 32 recessed in the first connection groove 41 and configured to fit with the fixture device 2, and the first elastic assembly 51 is enclosed at the clearance part 32 when the first elastic assembly 51 is transferred to the first connection groove 41.

Controlling the fixture device 2 to clamp the near-eye lens module 30 from the outer side of the near-eye lens module 30 includes:
controlling the fixture device 2 to clamp toward the clearance part 32 to enable the first elastic assembly 51 located in the first connection groove 41 to be at least partially shifted toward the recess of the clearance part 32.

Specifically, the fixture device 2 includes at least two clamping members 201. When the clamping members 201 cooperate to push the near-eye lens module 30 in opposite directions, the fixture device 2 can clamp the near-eye lens module 30 and the first elastic assembly 51. During the process of controlling the fixture device 2 to clamp the near-eye lens module 30 from the outer side of the near-eye lens module 30, at least one of the clamping members 201 in the fixture device is controlled to push toward the clearance part 32, causing compression or shifting of at least a portion of the first elastic assembly 51 located in the first connection groove 41 toward the recess of the clearance part 32. Therefore, when the fixture device 2 clamps the near-eye lens module 30 and the first elastic assembly 51, the space required by the fixture device 2 in the radial direction of the near-eye lens module 30 is reduced, making it convenient to mount the near-eye lens module 30 and the first elastic assembly 51 to corresponding positions on the frame assembly 11 during the assembly process for the AR glasses 1.

After the fixture device 2 is controlled to clamp the near-eye lens module 30 from the outer side of the near-eye lens module 30, the near-eye lens module 30 and the first elastic assembly 51 are transferred by means of the fixture device 2 to enable the first elastic assembly 51 to be received in the first connection groove 41 and the first receiving groove 31, and the fixture device 2 is removed to mount and fix the near-eye lens module 30 and the frame assembly 11.

Referring to FIG. 17, FIG. 17 is a schematic diagram showing transfer of the near-eye lens module and the first elastic assembly in an implementation of the assembly method for AR glasses according to an embodiment of the present application.

As shown in FIG. 17, in some implementations, in step S2, transferring the near-eye lens module 30 and the first elastic assembly 51 by means of the fixture device 2 includes:
controlling the fixture device 2 to move the near-eye lens module 30 to a side of the frame assembly 11 away from the optical waveguide assembly 22; and
using a preset pressing tool 3 to push the near-eye lens module 30 clamped by the fixture device 2 to move toward the frame assembly 11 to enable the first elastic assembly 51 to be opposite the first connection groove 41.

Specifically, as shown in FIG. 17(a), the fixture device 2 is first controlled to move the near-eye lens module 30 to the side of the frame assembly 11 away from the optical waveguide assembly 22, then as shown in FIG. 17(b), the preset pressing tool 3 is used to apply pressure to the near-eye lens module 30, with the direction of pressure from the near-eye lens module 30 to the frame assembly 11, so as to push the near-eye lens module 30 clamped by the fixture device 2 to move toward the frame assembly 11 to enable the first elastic assembly 51 to be opposite the first connection groove 41. For details, reference can be made to the positional relationship between the first elastic assembly 51 and the first connection groove 41 as shown in FIG. 17(c).

In some implementations, controlling the fixture device 2 to clamp the near-eye lens module 30 from the outer side of the near-eye lens module 30 includes: controlling the fixture device 2 to clamp the near-eye lens module 30 with a rear end of the fixture device 2 from a lateral side of the near-eye lens module 30; and
controlling the fixture device 2 to move the near-eye lens module 30 to the side of the frame assembly 11 away from the optical waveguide assembly 22 includes: controlling the fixture device 2 to move to enable a front end of the fixture device 2 to abut against the frame assembly 11.

Specifically, in this implementation, the rear end of the fixture device 2 is first used to clamp the near-eye lens module 30 from the lateral side of the near-eye lens module 30, the fixture device 2 is then controlled to move to enable the front end of the fixture device 2 to abut against the frame assembly 11, and then the preset pressing tool 3 is used to push the near-eye lens module 30 clamped by the fixture device 2 to move toward the frame assembly 11 to enable the first elastic assembly 51 to be opposite the first connection groove 41, making it convenient to align the near-eye lens module 30 with the frame assembly 11 during the assembly process for the AR glasses 1, thereby reducing the accuracy requirements of moving the fixture device 2.

As shown in FIGS. 15 and 16, the fixture device 2 includes at least two clamping members 201. Each clamping member 201 specifically includes a first clamping portion 2011 and a second clamping portion 2012 disposed opposite each other. The first clamping portion 2011 is disposed at a front end of the clamping member 201, and the second clamping portion 2012 is disposed at a rear end of the clamping member 201. The fixture device 2 is controlled to clamp the near-eye lens module 30 with the second clamping portion 2012 from the lateral side of the near-eye lens module 30, the fixture device 2 is then controlled to move to enable the first clamping portion 2011 of the fixture device 2 to abut against the frame assembly 11, and then the preset pressing tool 3 is used to push the near-eye lens module 30 clamped by the fixture device 2 to move toward the frame assembly 11 to enable the first elastic assembly 51 to be opposite the first connection groove 41, so as to accurately deliver the near-eye lens module 30 and the first elastic assembly 51 into corresponding mounting positions.

As shown in FIGS. 14 and 15, in some implementations, the fixture device 2 includes at least two clamping members 201 to cooperate to clamp the near-eye lens module 30. Each clamping member 201 includes a first clamping portion 2011 located at a front end of the clamping member 201 and a second clamping portion 2012 located at a rear end of the clamping member 201. The thickness of the second clamping portion 2012 in a second direction is less than the thickness of the first clamping portion 2011. The second direction is opposite the direction in which the clamping member 201 clamps the near-eye lens module 30.

Specifically, the second direction is opposite the direction in which the clamping member 201 clamps the near-eye lens module 30 (specifically, as shown in FIG. 15), and the thickness of the second clamping portion 2012 in the second direction is less than the thickness of the first clamping portion 2011. Therefore, when the fixture device 2 is controlled to clamp the near-eye lens module 30 with the second clamping portion 2012 from the lateral side of the near-eye lens module 30, the thicker second clamping portion 2012 clamps the near-eye lens module 30 more firmly, and when the fixture device 2 is controlled to move, the fixture device 2 is more easily transferred under the guidance of the first clamping portion 2011 to abut against the frame assembly 11.

As shown in FIGS. 1 to 15, it should be noted that the flowchart of the assembly method for AR glasses 1 as shown in FIG. 13 only includes the process of mounting the near-eye lens module 30 to the frame module 10. In some implementations, before the near-eye lens module 30 is mounted to the frame module 10, the process further includes:
mounting a display assembly 21 and/or an optical waveguide assembly 22 to the frame module 10.

Specifically, the schematic diagrams of the specific structure of the display assembly 21 and the optical waveguide assembly 22 that are mounted to the frame module 10 are shown in FIGS. 2 to 5. For example, the display assembly 21 and/or the optical waveguide assembly 22 may be mounted and fixed to the frame module 10 by means of adhesive bonding.

It should be noted that in the assembly method for AR glasses 1 according to the embodiments of the present application, during the assembly process for AR glasses 1, the display assembly 21 and the optical waveguide assembly 22 are first fixedly mounted to the frame assembly 11, and the near-eye lens module 30 is then mounted to the frame assembly 11 by means of the first engagement structure 40 and the second engagement structure 50 that are in a detachable fit, thereby achieving simpler and lower-cost mounting of the near-eye lens module 30; and after the display assembly 21 and the optical waveguide assembly 22 are mounted, the near-eye lens module 30 can be repeatedly trimmed or replaced.

For example, different users may have different needs for vision correction, or multiple eye exams and repeated polishing of the near-eye lens module 30 are needed during a process of fitting prescription eyewear for a user, or a user is still not satisfied with the refractive effect of the near-eye lens module 30 after the near-eye lens module 30 is mounted. In these scenarios, with the assembly method for AR glasses 1 according to the embodiments of the present application, the detachability of the near-eye lens module 30 is improved, and repeated processing for the AR glasses 1 is easy to achieve.

In some implementations, before controlling the fixture device 2 to clamp the near-eye lens module 30 and transfer the near-eye lens module 30, the assembly process further includes:
transferring the optical waveguide assembly 22 to the frame assembly 11 along an opposite direction to the first direction.

Specifically, transferring the near-eye lens module 10 by means of the fixture device 2 includes: transferring to the frame assembly 11 in the first direction that is a direction of the near-eye lens module 10 relative to the optical waveguide assembly 22 after the AR glasses 1 is mounted.

It should be understood that in the implementations of the present application, the optical waveguide assembly 22 and the near-eye lens module 30 are mounted in opposite directions. Specifically, referring to FIGS. 1 to 10, the lens mount 111 includes a central portion 1111, the first engagement structure 40 is disposed on a side of the central portion 1111 close to the temple assembly 12, and the optical waveguide assembly 22 is connected to a side of the central portion 1111 away from the temple assembly 12. It is known that the central portion 1111 separates the first engagement structure 40 from the optical waveguide assembly 22 to ensure the distance between the near-eye lens module 30 and the optical waveguide assembly 22 and also improve the overall strength of the AR glasses 1.

As shown in FIGS. 15 and 16, an embodiment of the present application further provides a fixture device 2. The fixture device 2 is used to assemble any of the AR glasses 1 according to the embodiments of the present application. The fixture device 2 includes at least two clamping members 201 to cooperate to clamp a target lens. Each clamping member 201 includes a first clamping portion 2011 located at a front end of the clamping member 201 and a second clamping portion 2012 located at a rear end of the clamping member 201. The thickness of the second clamping portion 2012 in the second direction is less than the thickness of the first clamping portion 2011. The second direction is opposite the direction in which the clamping member 201 clamps the near-eye lens module 30.

Specifically, the second direction is opposite the direction in which the clamping member 201 clamps the near-eye lens module 30 (specifically, as shown in FIG. 15), and the thickness of the second clamping portion 2012 in the second direction is less than the thickness of the first clamping portion 2011. Therefore, when the fixture device 2 is controlled to clamp the near-eye lens module 30 with the second clamping portion 2012 from the lateral side of the near-eye lens module 30, the thicker second clamping portion 2012 clamps the near-eye lens module 30 more firmly, and when the fixture device 2 is controlled to move, the fixture device 2 is more easily transferred under the guidance of the first clamping portion 2011 to abut against the frame assembly 11.

In some implementations, the thickness of the second clamping portion 2012 in the second direction ranges from 0.02 to 0.4 mm.

Specifically, the thickness of the second clamping portion 2012 in the second direction is less than the thickness of the first clamping portion 2011, and the thickness of the second clamping portion 2012 in the second direction ranges from 0.02 to 0.4 mm, so that when the fixture device 2 is controlled to move, the fixture device 2 is more easily transferred under the guidance of the first clamping portion 2011 to abut against the frame assembly 11.

Referring to FIG. 18, FIG. 18 is a schematic diagram showing transfer of the near-eye lens module 30 and the first elastic assembly of the AR glasses according to an embodiment of the present application.

As shown in FIG. 18, in some implementations, at least one second clamping portion 2012 is a flexible member.

It should be noted that by designing at least one second clamping portion 2012 as a flexible member, even if the near-eye lens module 30 is not aligned with the corresponding mounting position during the transfer of the near-eye lens module 30 by means of the fixture device 2 as shown in FIG. 18(a), the flexible second clamping portion 2012 can still guide the near-eye lens module 30 to the corresponding mounting position when the near-eye lens module 30 is pushed toward the frame assembly 11, as shown in FIG. 18(b) which specifically shows the second clamping portion 2012 pushing the near-eye lens module 30 toward the mounting position. Thus, the implementations of the present application facilitate the alignment of the near-eye lens module 30 with the frame assembly 11 during the assembly process for the AR glasses 1, thereby reducing the accuracy requirements of moving the fixture device 2.

As shown in FIGS. 15 to 18, in some implementations, the fixture device 2 is configured to clamp and transfer the target lens to connect the target lens to the frame assembly 11, and a guide structure 2013 that fits with the frame assembly 11 is formed on the side of the first clamping portion 2011 toward the second direction. It should be understood that the target lens refers, for example, to a refractive lens in the near-eye lens module 30.

For example, as shown in FIGS. 17(a) and 17(b), specifically, the guide structure 2013 is configured to guide the transfer of the fixture device 2 during the process of the fixture device 2 clamping and transferring the near-eye lens module 30, so as to enable the first clamping portion 2011 of the fixture device 2 to abut against the frame module 10, thereby improving the accuracy of transfer; or the guide structure 2013 is configured to use the preset pressing tool 3 to push the near-eye lens module 30 clamped by the fixture device 2 to move toward the frame assembly 11, so as to guide the movement of the near-eye lens module 30 to enable the near-eye lens module 30 to accurately enter the corresponding mounting position.

Referring to FIG. 19, FIG. 19 is a schematic modular diagram of the fixture device 2 according to an embodiment of the present application.

As shown in FIG. 19, in some implementations, the fixture device 2 further includes a driving member 202. The driving member 202 is connected to at least one of the two clamping members 201 and is configured to drive the at least two clamping members 201 to move toward or away from each other.

It should be understood that the at least two clamping members 201 form a clamping opening through which the near-eye lens module 30 is clamped, and the driving member 202 drives the at least two clamping members 201 to move toward or away from each other, so that the size of the clamping opening can be adjusted, thereby achieving the control of clamping and releasing the near-eye lens module 30.

In summary, the embodiments of the present application provide a pair of AR glasses 1, an assembly method for AR glasses 1, and a fixture device 2. The AR glasses 1 include: a frame module 10 including a frame assembly 11 and a temple assembly 12 connected to the frame assembly 11, where the frame assembly 11 is provided with a first engagement structure 40; a display module 20 including a display assembly 21 and an optical waveguide assembly 22, where the optical waveguide assembly 22 is connected to the frame assembly 11, the optical waveguide assembly 22 is provided with a coupling-in grating region 221 and a coupling-out grating region 222, and the display assembly 21 is connected to the frame assembly 11 and disposed corresponding to the coupling-in grating region 221; and a near-eye lens module 30 provided with a second engagement structure 50, where the second engagement structure 50 is configured to engage the first engagement structure 40, and the near-eye lens module 30 is disposed corresponding to the coupling-out grating region 222 and on a side of the optical waveguide assembly 22 close to the temple assembly 12. In the AR glasses 1 according to the embodiments of the present application, the provision of the first engagement structure 40 and the second engagement structure 50 that engage with each other achieves reliable fixing of the near-eye lens module 30 in the AR glasses 1, improves the detachability of the near-eye lens module 30, and facilitates repeated processing for the AR glasses 1, and the first engagement structure 40 and the second engagement structure 50 are also arranged at positions such that the space between the near-eye lens module 30 and the optical waveguide assembly 22 is isolated from the outside.

Those of ordinary skill in the art may understand that all or some of the steps in the method and the functional modules/units in the system and the device disclosed above may be implemented as software, firmware, hardware and appropriate combinations thereof. In a hardware embodiment, the division between the functional modules/units mentioned in the above description does not necessarily correspond to the division of physical assemblies. For example, one physical assembly may have multiple functions, or one function or step may be jointly performed by several physical assemblies. Some or all of the physical assemblies may be implemented as software executed by a processor such as a central processing unit, a digital signal processor or a microprocessor, or may be implemented as hardware or a configuration circuit such as an application-specific configuration circuit. Such software may be distributed on a computer-readable medium, which may include a computer storage medium (or a non-transitory medium) and a communication medium (or a transitory medium).

It should be understood that terms used in this specification of the present application are only for the purpose of describing specific embodiments, and are not intended to limit the present application. Unless otherwise explicitly specified and defined, terms "mounting", "connecting" and "connection" should be understood in a broad sense, for example, they may be a fixed connection, a detachable connection, or an integrated connection, may be a mechanical connection or an electrical connection; or may be a direct connection, an indirect connection by means of an intermediate medium, or internal communication between two elements. For those of ordinary skill in the art, the specific meaning of the terms mentioned above in the present application can be construed according to specific circumstances. As used in this specification and the appended claims of the present application, the singular forms "a", "an", and "the" are intended to include plural forms, unless otherwise explicitly specified in the context.

It should be understood that the term "and/or" used in this specification and the appended claims of the present application indicates any combination and all possible combinations of one or more items listed in association, and includes the combinations. It should be noted that the term "comprise", "include", or any other variant thereof herein is intended to encompass a non-exclusive inclusion, such that a process, method, article, or system that includes a series of elements not only includes those elements, but also includes other elements not explicitly listed, or elements that are inherent to such a process, method, article, or system.

## Claims

1. A pair of AR glasses, **characterized by** comprising:
a frame module comprising a frame assembly and a temple assembly connected to the frame assembly, wherein the frame assembly is provided with a first engagement structure;
a display module comprising a display assembly and an optical waveguide assembly, wherein the optical waveguide assembly is connected to the frame assembly and provided with a coupling-in grating region and a coupling-out grating region, and the display assembly is connected to the frame assembly and disposed corresponding to the coupling-in grating region; and
a near-eye lens module provided with a second engagement structure, wherein the second engagement structure is configured to engage the first engagement structure, and the near-eye lens module is disposed corresponding to the coupling-out grating region and on a side of the optical waveguide assembly close to the temple assembly.

2. The AR glasses according to claim 1, **characterized in that** the near-eye lens module comprises one of a refractive assembly or a plano assembly.

3. The AR glasses according to claim 1, **characterized in that** at least one of the first engagement structure or the second engagement structure is an elastic engagement structure.

4. The AR glasses according to claim 3, **characterized in that** the first engagement structure comprises a first connection groove disposed on a side of the frame assembly facing the near-eye lens module; and
the second engagement structure comprises a first elastic assembly disposed on a lateral portion of the near-eye lens module and configured to elastically engage with the first connection groove.

5. The AR glasses according to claim 4, **characterized in that** a first elastic rubber layer is provided on an inner wall of the first connection groove.

6. The AR glasses according to claim 4, **characterized in that** the near-eye lens module is provided with a first receiving groove, and the first elastic assembly is detachably connected to the near-eye lens module by means of the first receiving groove.

7. The AR glasses according to claim 6, **characterized in that** the first receiving groove is disposed opposite the frame assembly and formed on a lateral side of the near-eye lens module, and when the first elastic assembly is connected to and fits with the near-eye lens module, the first elastic assembly partially protrudes from the first receiving groove.

8. The AR glasses according to claim 4, **characterized in that** at least two first elastic assemblies are provided, and the first elastic assemblies at least form elastic structure engagement with the first connection groove at two points.

9. The AR glasses according to claim 8, **characterized in that** the first elastic assemblies are at least disposed on opposite sides of the near-eye lens module in at least one of a length direction or a width direction.

10. The AR glasses according to claim 4, **characterized in that** the first elastic assembly comprises a first elastic ring member sleeved on an outer periphery of the near-eye lens module and forming elastic structure engagement with the first connection groove.

11. The AR glasses according to claim 6, **characterized in that** the near-eye lens module further comprises a clearance part recessed in the first connection groove and configured to fit with an external workpiece, and when the first elastic assembly is connected to the first receiving groove, the first elastic assembly is enclosed in the clearance part.

12. The AR glasses according to claim 3, **characterized in that** the second engagement structure comprises a second connection groove disposed on a side of the near-eye lens module facing the frame assembly; and
the first engagement structure comprises a second elastic assembly disposed on a lateral portion of the frame assembly and configured to elastically engage with the second connection groove.

13. The AR glasses according to claim 12, **characterized in that** a second elastic rubber layer is provided on an inner wall of the second connection groove.

14. The AR glasses according to claim 12, **characterized in that** the frame assembly is provided with a second receiving groove, and the second elastic assembly is detachably connected to the frame assembly by means of the second receiving groove.

15. The AR glasses according to claim 3, **characterized in that** the first engagement structure comprises a first connecting surface formed on a side of the frame assembly facing the near-eye lens module; and
the second engagement structure comprises a third elastic assembly disposed on a lateral portion of the near-eye lens module and configured to elastically engage with the first connecting surface.

16. The AR glasses according to claim 15, **characterized in that** the first connecting surface is formed with a first friction protrusion to increase interference between the third elastic assembly and the first connecting surface in a first direction, wherein the first direction is a direction of the optical waveguide assembly relative to the near-eye lens module.

17. The AR glasses according to claim 3, **characterized in that** the second engagement structure comprises a second connecting surface formed on a side of the near-eye lens module facing the frame assembly; and
the first engagement structure comprises a fourth elastic assembly disposed on a lateral portion of the frame assembly and configured to elastically engage with the second connecting surface.

18. The AR glasses according to claim 17, **characterized in that** the second connecting surface is formed with a second friction protrusion to increase friction between the fourth elastic assembly and the second connecting surface in a first direction, wherein the first direction is a direction of the optical waveguide assembly relative to the near-eye lens module.

19. The AR glasses according to any one of claims 1 to 18, **characterized in that** a spacing between the near-eye lens module and the optical waveguide assembly in a first direction ranges from 1 to 1000 µm, wherein the first direction is a direction of the optical waveguide assembly relative to the near-eye lens module.

20. The AR glasses according to any one of claims 1 to 18, **characterized in that** the frame assembly is provided, on a side close to the near-eye lens module, with a guide groove configured to fit with an external workpiece, wherein the guide groove has a greater width on a side close to the temple assembly than on a side away from the temple assembly.

21. The AR glasses according to any one of claims 1 to 18, **characterized in that** the frame assembly comprises a lens mount and a temple connector connected to the temple assembly and the lens mount, wherein the lens mount is provided with the first engagement structure to be connected to the near-eye lens module;
wherein the optical waveguide assembly is connected to a side of the lens mount away from the temple connector.

22. The AR glasses according to claim 21, **characterized in that** the frame assembly further comprises a receiving cavity disposed on a side of the lens mount close to the temple assembly and opposite the coupling-in grating region of the optical waveguide assembly, wherein the display assembly is received in the receiving cavity.

23. The AR glasses according to claim 21, **characterized in that** the lens mount comprises a central portion, the first engagement structure is disposed on a side of the central portion close to the temple assembly, and the optical waveguide assembly is connected to a side of the central portion away from the temple assembly.

24. A pair of AR glasses, **characterized by** comprising:
a frame assembly provided with a first engagement structure and a temple connector that is configured to fit with an external temple;
a display module comprising a display assembly and an optical waveguide assembly, wherein the optical waveguide assembly is connected to the frame assembly and provided with a coupling-in grating region and a coupling-out grating region, and the display assembly is connected to the frame assembly and disposed corresponding to the coupling-in grating region; and
a near-eye lens module provided with a second engagement structure, wherein the second engagement structure is configured to engage the first engagement structure, and the near-eye lens module is disposed corresponding to the coupling-out grating region and on a side of the optical waveguide assembly close to the temple connector.

25. An assembly method for AR glasses for assembling a pair of AR glasses according to any one of claims 1 to 24, **characterized in that** the method comprises:
providing a frame assembly, a near-eye lens module to be mounted to the frame assembly, and a fixture device for clamping the near-eye lens module;
controlling the fixture device to clamp and transfer the near-eye lens module to enable the second engagement structure of the near-eye lens module to be connected to the first engagement structure of the frame assembly in an engaging manner; and
removing the fixture device to obtain the AR glasses.

26. The assembly method for AR glasses according to claim 25, **characterized in that** the first engagement structure comprises a first connection groove disposed on a side of the frame assembly facing the near-eye lens module, the second engagement structure comprises a first receiving groove and a first elastic assembly, wherein the first receiving groove is disposed opposite the frame assembly and formed on a lateral side of the near-eye lens module, and when the first elastic assembly is connected to and fits with the near-eye lens module, the first elastic assembly partially protrudes from the first receiving groove; and
controlling the fixture device to clamp and transfer the near-eye lens module comprises:
providing the first elastic assembly;
transferring the first elastic assembly to the first connection groove to enable the first elastic assembly to partially protrude from a lateral portion of the near-eye lens module;
controlling the fixture device to clamp the near-eye lens module from an outer side of the near-eye lens module; and
transferring the near-eye lens module and the first elastic assembly by means of the fixture device to enable the first elastic assembly to be received in the first connection groove and the first receiving groove.

27. The assembly method for AR glasses according to claim 26, **characterized in that** the method further comprises:
controlling the fixture device to clamp the near-eye lens module from the outer side of the near-eye lens module to enable the first elastic assembly to be compressed toward the first receiving groove;
wherein after the fixture device is disengaged from the near-eye lens module, the first elastic assembly recovers from deformation to enable the first elastic assembly to fit with the first connection groove and the first receiving groove.

28. The assembly method for AR glasses according to claim 27, **characterized in that** the near-eye lens module further comprises a clearance part recessed in the first connection groove and configured to fit with the fixture device, and when the first elastic assembly is transferred to the first connection groove, the first elastic assembly is enclosed in the clearance part; and
controlling the fixture device to clamp the near-eye lens module from the outer side of the near-eye lens module comprises:
controlling the fixture device to clamp toward the clearance part to enable the first elastic assembly located in the first connection groove to be at least partially shifted toward a recess of the clearance part.

29. The assembly method for AR glasses according to claim 27, **characterized in that** transferring the near-eye lens module and the first elastic assembly by means of the fixture device comprises:
controlling the fixture device to move the near-eye lens module to a side of the frame assembly away from the optical waveguide assembly; and
using a preset pressing tool to push the near-eye lens module clamped by the fixture device to move toward the frame assembly to enable the first elastic assembly to be opposite the first connection groove.

30. The assembly method for AR glasses according to claim 29, **characterized in that** controlling the fixture device to clamp the near-eye lens module from an outer side of the near-eye lens module comprises: controlling the fixture device to clamp the near-eye lens module with a rear end of the fixture device from a lateral side of the near-eye lens module; and
controlling the fixture device to move the near-eye lens module to a side of the frame assembly away from the optical waveguide assembly comprises: controlling the fixture device to move to enable a front end of the fixture device to abut against the frame assembly.

31. The assembly method for AR glasses according to claim 30, **characterized in that** the fixture device comprises at least two clamping members to cooperate to clamp the near-eye lens module, each of the clamping members comprising a first clamping portion located at a front end of the clamping member and a second clamping portion located at a rear end of the clamping member;
wherein a thickness of the second clamping portion in a second direction is less than a thickness of the first clamping portion, the second direction opposite a direction in which the clamping member clamps the near-eye lens module.

32. The assembly method for AR glasses according to any one of claims 25 to 31, **characterized in that** controlling the fixture device to clamp and transfer the near-eye lens module is implemented by transferring the near-eye lens module to the frame assembly along the first direction; and
before controlling the fixture device to clamp and transfer the near-eye lens module, the method further comprises:
transferring the optical waveguide assembly to the frame assembly along an opposite direction to the first direction;
wherein the first direction is a direction of the optical waveguide assembly relative to the near-eye lens module.

33. A fixture device for assembling a pair of AR glasses according to any one of claims 1 to 24, **characterized by** comprising at least two clamping members to cooperate to clamp a target lens, each of the clamping members comprising a first clamping portion located at a front end of the clamping member and a second clamping portion located at a rear end of the clamping member;
wherein a thickness of the second clamping portion in a second direction is less than a thickness of the first clamping portion, the second direction opposite a direction in which the clamping member clamps the near-eye lens module.

34. The fixture device according to claim 33, **characterized in that** a thickness of the second clamping portion in the second direction is greater than or equal to 0.02 mm and less than or equal to 0.4 mm.

35. The fixture device according to claim 33, **characterized in that** at least one of the second clamping portions is a flexible member.

36. The fixture device according to claim 33, **characterized in that** the fixture device is configured to clamp and transfer the target lens to enable the target lens to be connected to a frame assembly, and a guide structure that fits with the frame assembly is formed on a side of the first clamping portion toward the second direction.

37. The fixture device according to any one of claims 33 to 36, **characterized by** further comprising a driving member connected to at least one of the two clamping members and configured to drive the two clamping members to move toward or away from each other.
